# EUROPEAN PATENT APPLICATION

(11) **EP 1 056 247 A2**
(43) Date of publication of application: **29.11.2000**
(21) Application number: 00304448.4
(22) Date of filing: 25.05.2000
(51) Int. Cl.: H04L 12/58

(54) **Printing system for e-mail**

(30) Priority: 26.05.1999 JP 14666099
(71) Applicant: CANON KABUSHIKI KAISHA, Tokyo (JP)
(72) Inventor: Shimizu, Hirokimi, Ohta-ku, Tokyo (JP); Maeda, Kenji, Ohta-ku, Tokyo (JP); Kobayashi, Makoto, Ohta-ku, Tokyo (JP); Sunata, Jin, Ohta-ku, Tokyo (JP)
(74) Representative: Beresford, Keith Denis Lewis

(57) **Abstract**

A printing system includes an application server for receiving e-mail and for converting the received e-mail into print data. A printer adapter receives the print data from the application server via a communication network, and converts the print data into a format which can be received by a printer. A printer prints out the print data converted by the printer adapter.

## Description

### BACKGROUND OF THE INVENTION

### Field of the Invention

The present invention relates to a printing system for electronic mail (hereinafter referred to as "e-mail"). More particularly, the invention relates to electronic mail services by utilizing cellular telephones or mobile communication terminals, such as personal digital assistants (PDAs), and print output services for outputting information to printers connected to a communication network.

### Description of the Related Art

Hitherto, e-mail services and network printing services are totally different services and are not provided in conjunction with each other. In particular, cellular telephones and PDA having e-mail functions are not provided with printing functions. If it is desired that e-mail be printed, it is necessary to first transfer it to a mail address assigned to a client personal computer (PC) and to then print it out from a printer connected to the PC. Accordingly, there is no means to print received e-mail for e-mail users who possess only cellular telephones or PDAs.

Additionally, in sending e-mail, files can be attached, and in order to open a received file attached to the e-mail, it is necessary to run a corresponding application program on a PC. It is thus impossible for e-mail users who only possess cellular telephones or PDAs without functions to run application programs to open received files.

Generally, in news distribution services utilizing e-mail, detailed news information is given on homepages on the Internet, and only news summaries are distributed to users, and only the homepage address, i.e., uniform resource locator (URL), is sent to the users to instruct them to visit the Internet site corresponding to the URL to obtain more detailed information. However, since a Web browser is required on a PC to visit the Internet site, e-mail users having only cellular telephones or PDAs cannot see the details of the distributed news.

In short, it is impossible for e-mail users utilizing cellular telephones or PDAs without a printing function to print out e-mail, run application programs, or check the content of files attached to e-mail or additional information.

### SUMMARY OF THE INVENTION

Accordingly, in order to solve the above-described problems, it is a concern of the present invention to provide a simply constructed printing system which allows e-mail users utilizing only cellular telephones or PDAs without a printing function to perform printing even if the users do not possess a PC.

It is another concern of the present invention to improve user operability by allowing printing to be performed with a minimal amount of character input, such as print commands, in mobile communication terminals.

It is still another concern of the present invention to enhance user operability by allowing e-mail users utilizing cellular telephones or PDAs to directly print out homepages without the need to open the homepages on a PC.

According to one aspect of the present invention, there is provided a printing system including an application server, a printer adapter, and a printer. The application server receives electronic mail and converts the received electronic mail into print data. The printer adapter receives the print data from the application server via a communication network and converts the received print data into a data format matching an interface for a printer to which the print data is to be sent. The printer prints the print data converted by and sent from the printer adapter.

According to another aspect of the present invention, there is provided a printing control apparatus including an analyzing unit and a determining unit. The analyzing unit analyzes an address of received electronic mail. The determining unit determines a type of printing of the received electronic mail according to a result of an analysis conducted by the analyzing unit.

According to still another aspect of the present invention, there is provided a printing control apparatus including an input unit, an identifying unit, an acquiring unit, a processing unit, and an output unit. The input unit inputs an instruction to print a designated Internet homepage. The identifying unit identifies information concerning a status or a type of printer. The acquiring unit acquires data of the designated Internet homepage. The processing unit processes the data acquired by the acquiring unit based on the information concerning the status or the type of printer identified by the identifying unit. The output unit outputs the data processed by the processing unit to the printer.

According to a further aspect of the present invention, there is provided a printing control method including an analyzing step and a determining step. In the analyzing step, an address of received electronic mail is analyzed. In the determining step, a type of printing of the electronic mail is determined according to a result of an analysis conducted in the analyzing step.

According to a yet further aspect of the present invention, there is provided a printing control method including an input step, an identifying step, an acquiring step, a processing step, and an output step. In the input step, an instruction to print a designated Internet homepage is input. In the identifying step, information concerning a status or a type of printer is identified. In the acquiring step, data of the designated Internet homepage is acquired. In the processing step, the data acquired in the acquiring step is processed based on the information concerning the status or the type of printer identified in the identifying step. In the output step, the data processed in the processing step is output to the printer.

According to a further aspect of the present invention, there is provided a storage medium for storing a program. The program includes an analyzing step of analyzing an address of received electronic mail, and a determining step of determining a type of printing of the electronic mail according to a result of an analysis conducted in the analyzing step.

According to a further aspect of the present invention, there is provided a storage medium for storing a program. The program includes an input step, an identifying step, an acquiring step, a processing step, and an output step. In the input step, an instruction to print a designated Internet homepage is input. In the identifying step, information concerning a status or a type of printer is identified. In the acquiring step, data of the designated Internet homepage is acquired. In the processing step, the data acquired in the acquiring step is processed based on the information concerning the status or the type of printer identified in the identifying step. In the output step, the data processed in the processing step is output to the printer.

According to a further aspect of the present invention, there is provided a printer adapter including a receiving unit and a converting unit. The receiving unit receives print data via a communication network from an application server which receives electronic mail from a mobile terminal and which converts the received electronic mail into the print data. The converting unit converts the print data received by the receiving unit into a data format corresponding to an interface for a printer to which the print data is to be sent.

According to a further aspect of the present invention, there is provided a printer including a receiving unit and a printing unit. The receiving unit receives print data from a printer adapter, the print data being converted from electronic mail sent from a mobile terminal by an application server and being sent to the printer adapter, in which the print data is converted into a data format corresponding to an interface for the printer to which the print data is to be sent. The printing unit performs printing based on the print data received by the receiving unit.

According to a further aspect of the present invention, there is provided a program including an analyzing step of analyzing an address of received electronic mail, and a determining step of determining a type of printing of the electronic mail according to a result of an analysis conducted in the analyzing step.

According to a further aspect of the present invention, there is provided a program including an input step, an identifying step, an acquiring step, a processing step, and an output step. In the input step, an instruction to print a designated Internet homepage is input. In the identifying step, information concerning a status or a type of printer is identified. In the acquiring step, data of the designated Internet homepage is acquired. In the processing step, the data acquired in the acquiring step is processed based on the information concerning the status or the type of printer identified in the identifying step. In the output step, the data processed in the processing step is output to the printer.

According to the present invention constructed as described above, an e-mail user utilizing a cellular telephone or a PDA without a printing function transfers an e-mail address, which designates a printer, within an application server in which the user has been registered. Upon receiving this e-mail, the application server converts the content to be printed into print data corresponding to the registered printer. The application server then sends the print data to a printer adapter by using a communication network. The adapter converts the print data into a data format which can be received by the printer. The printer then prints out the converted print data.

In the application server, a plurality of application programs for opening attached files have been registered. An e-mail user utilizing a cellular telephone or a PDA without a function of opening attached files transfers e-mail with an attached file to the e-mail address designating a printer. Upon receiving this e-mail, the application server runs the application program corresponding to the attached file and opens the file. The application server then converts the content of the opened file into print data corresponding to the registered printer. The application server sends the converted print data into an adapter printer by using a communication network. The adapter converts the print data into a data format which can be received by the printer. The printer then prints out the converted print data.

Further objects, features and advantages of the present invention will become apparent from the following description of the preferred embodiments with reference to the attached drawings.

### BRIEF DESCRIPTION OF THE DRAWINGS

Fig. 1 is a schematic diagram illustrating a system according to an embodiment of the present invention;
Fig. 2 is a schematic diagram illustrating a system according to another embodiment of the present invention;
Fig. 3 is a schematic diagram illustrating a system according to another embodiment of the present invention;
Fig. 4 is a schematic diagram illustrating an application server shown in Figs. 1 through 3;
Fig. 5 is a block diagram illustrating a software module within the application server shown in Fig. 4;
Fig. 6 is a block diagram illustrating the electrical configuration of an adapter shown in Figs. 1 through 3;
Fig. 7 is a block diagram illustrating the software configuration implemented on the adapter shown in Fig. 6;
Fig. 8 is a flow chart illustrating the process performed by a client, such as a PDA;
Fig. 9 is a flow chart illustrating the process performed by a server of a network printing system;
Fig. 10 is a flow chart illustrating the process performed by the adapter;
Fig. 11 is a flow chart illustrating the process performed by an email object;
Fig. 12 is a flow chart illustrating the process performed by a PrinterManager object;
Fig. 13 is a flow chart illustrating the process performed by a PrinterDriver object;
Fig. 14 is a flow chart illustrating the process performed by a PrintJob object; and
Fig. 15 is a flow chart illustrating the process performed by a MailServer object.

### DESCRIPTION OF THE PREFERRED EMBODIMENTS

The present invention is described in detail below through illustrations of preferred embodiments.

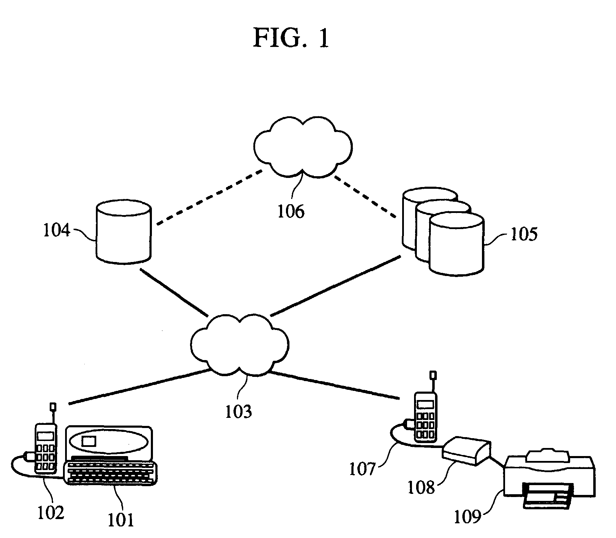

Referring to Fig. 1, a system constructed in accordance with an embodiment of the present invention is formed of the following elements. A terminal (hereinafter referred to as a "PDA") 101 is used for sending and receiving e-mail and for displaying the contents of e-mail. Reference numeral 103 indicates a communication network 103, such as a public switched network, an integrated services digital network (ISDN), or a satellite communication, (in this embodiment, a public switched network). A mobile communication terminal 102 connects the communication network 103 and the PDA 101. An Internet service provider 104 intervenes between users and the Internet 106, which is a logical space. A printer 109 serves as a printing apparatus. An adapter 108 is connected to the printer 109. A mobile communication terminal 107 connects the communication network 103 and the adapter 108. An application server 105 communicates with the printer 109 according to predetermined protocols.

The Internet service provider 104 manages mail accounts of the PDA 101, and also communicates with the PDA 101 according to predetermined protocols so as to send and receive mail data under the control of the PDA 101.

The application server 105 manages various items of information, such as a plurality of mail accounts and telephone numbers associated with a plurality of printers, the types of printers, etc. The application server 105 also sends and receives mail to and from the communication network 103 or the Internet 106 and determines the content of the received mail. According to the determination result, the application server 105 performs, for example, the following operations: selecting the type of service, such as printing mail text, expanding a file attached to the e-mail and printing the expanded file, or acquiring the content of the address designated by the URL and printing it; converting the data corresponding into the selected service to information unique to the designated printer 109, connecting with the adapter 108 (may be connecting with the Internet 106, calling the communication network 103 through a telephone, and receiving incoming calls from the communication network 103 according to the status); performing authentication with the adapter 108; exchanging print data; and handling errors which have occurred in the adapter 108 or the printer 109. The application server 105 also controls a determination of whether it is to provide an instruction to immediately transfer the print data to the adapter 108 or whether it is to await a call from the adapter 108.

The adapter 108 performs, for example, the following operations: identifying errors according to a determination of the printer 109 connected to the adapter 108 and an interface with the printer 109; informing the status of the error and the status of the communication state to the application server 105; controlling the mobile communication terminal 107; calling the application server 105 according to a user operation; receiving incoming calls from the application server 105 and performing automatic calling according to an instruction from the application server 105; performing authentication with the application server 105; and sending received print data to the printer 109 according to predetermined protocols.

According to the system constructed as described above, a description is given below of transferring the content of the mail received by the PDA 101 to the application server 105.

The user specifies the user mail address related to an application (in this embodiment, mail text) to be printed. The user then performs setting so that that the mail text to be printed is to be transferred to the specified address and sends a transfer command to the PDA 101. Upon receiving the transfer command, the PDA 101 controls the mobile communication terminal 102 to connect the PDA 101 to the Internet service provider 104 via the communication network 103. The mail data is then transferred according to predetermined protocols, and data exchanges are appropriately performed. Then, the network is disconnected to complete the mail transfer operation.

Meanwhile, the application server 105 scans (regularly checks) the incoming boxes of the accounts. Upon receiving the print data, the application server 105 performs the above-described processing according to a predetermined order. The configurations of the individual elements of the system according to an embodiment of the present invention are discussed in detail below.

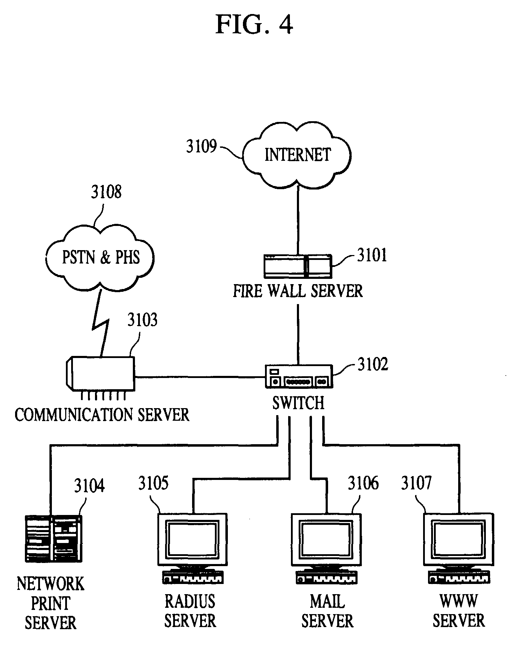

Fig. 4 is a diagram illustrating the application server 105 schematically shown in Fig. 1 according to this embodiment.

A firewall server 3101 has the function of protecting the application server 105 from invasions and attacks from external sources, and is used for safely operating a group of Intranet servers within the application server 105.

A switch 3102 is used for constituting the Intranet within the application server 105 of this embodiment. A communication server 3103 supports connections performed by the Personal Handyphone System (PHS) Internet Access Forum Standard (PIAFS), by analog modems, and by ISDN, and has a firewall function and a remote authentication dial-in user service (RADIUS) client function.

A network print server 3104 provides network print services, such as obtaining print data according to the purpose of printing, creating a print job, and performing communications with the adapter 108.

A RADIUS server 3105 is a standard dial-up connection user authentication system. The RADIUS server 3105 receives an authentication request from the communication server 3103 having a RADIUS client function and returns an authentication response to the client.

A mail server 3106 receives print request mail. A WWW server 3107 possesses homepages of the network print services of this embodiment. The WWW server 3107 provides a user homepage for each user and also provides each user with a function of controlling print services by using, for example, the common gateway interface (CGI). Reference numeral 3109 indicates the Internet, and 3108 represents a public switched telephone network (PSTN) or a PHS network.

The mail printing function of the application server 105 constructed as described above, as shown in Fig. 4, is as follows.

Before receiving e-mail print services, a user of the network print service of this embodiment obtains an e-mail account of the mail server 3106 within the application server 105. By sending e-mail to this account, the user is able to receive print services.

A plurality of the above-mentioned e-mail accounts are assigned to each user according to the number of services to be provided. In this embodiment, assuming that the following four types of services are provided, four e-mail accounts are provided for each user.
1. printing e-mail text
2. printing attached files
3. printing e-mail text and attached files
4. printing URL
By sending e-mail to the mail account of service 1, the user requests the application server 105 to create print data of e-mail text. By sending e-mail to the mail account of service 2, the user requests the application server 105 to create print data of a file attached to the e-mail. By sending e-mail to the mail account of service 3, the user requests the application server 105 to generate print data of e-mail text and an attached file. By sending e-mail to the mail account of service 4, the user requests the application server 105 to acquire the hypertext markup language (HTML), the extensible markup language (XML), etc. corresponding to the URL described in the e-mail text, and to create the print data thereof.

If e-mail without an attached file is sent to the e-mail address of service 2 or 3, or if e-mail without a URL is sent to the e-mail address of service 4, print data indicating only e-mail text is created.

If e-mail containing only an attached file is sent to the e-mail address of service 1, print data representing only the attached file is created. If e-mail containing only a URL is sent to the e-mail address of service 1, print data representing only the URL is generated.

If an HTML has not been successfully acquired, or if there is a mistake in a URL even though e-mail containing the URL is sent to the mail address of service 4, the occurrence of an error is reported to the user from the application server 105.

It is now assumed that the domain name of the mail server 3106 of this embodiment is mnp.co.jp and that the user has acquired an account designated as "tama". In this case, the mail server 3106 automatically prepares the following e-mail accounts.

In the system constructed in accordance with this embodiment, four addresses are determined as follows: the account "tama" is used for printing e-mail text; the account "tama" + A is used for printing an attached file; the account "tama" + B is used for printing e-mail text and an attached file; and the account "tama" + C is used for printing a URL.
1. tama@mnp.co.jp (printing e-mail text)
2. tamaA@mnp.co.jp (printing attached files)
3. tamaB@mnp.co.jp (printing e-mail text and attached files)
4. tamaC@mnp.co.jp (printing URL)
The above-mentioned addresses are registered in a database of the application server 105, in which case, the telephone number of the mobile communication terminal 107 required for establishing a connection with the printer 109 when e-mail is sent may be also registered in a database of the RADIUS server 3105 in correspondence with the four addresses. Information indicating the type of printer 109 may also be registered in the database of the RADIUS server 3105.

The user, tama, is able to select the e-mail printing function by the above-described addresses. Since such printing functions and the e-mail addresses are registered in correspondence with each other, the user is able to set the address merely by selecting the registered address through a mobile communication terminal. Thus, according to this embodiment of the present invention, it is possible for the user to select the address and to set the printing function at the same time without the need to input a print command.

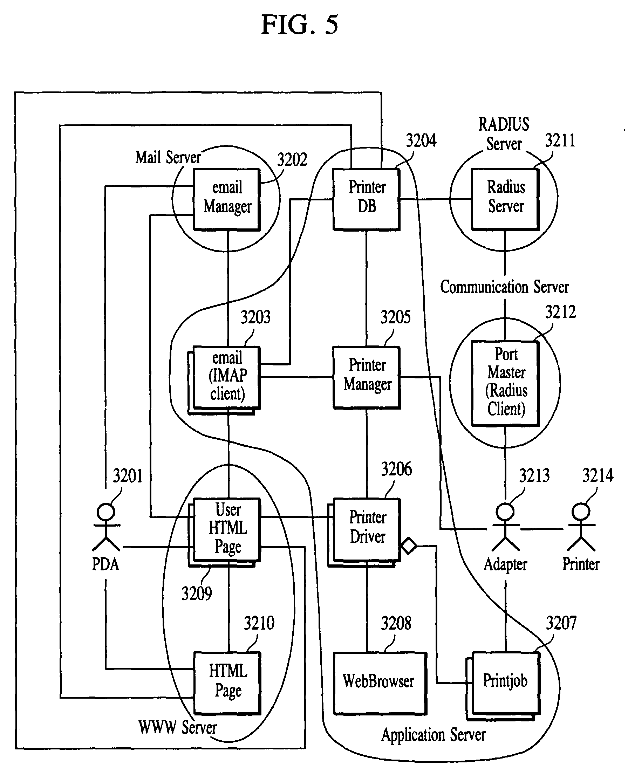

Fig. 5 is a block diagram illustrating a software module within the application server 105.

Physically, a MailServer (emailManager) 3202 is disposed within the mail server 3106. The MailServer 3202 has an internet messaging access protocol (IMAP) server function so as to interpret multipart Multipurpose Internet Mail Extensions (MIME) and to inform users (in this embodiment, to an email (IMAP client) object 3203) of the arrival of mail.

The email object 3203 has data to be printed and a user ID (in this case, an e-mail address). The email object 3203 has an IMAP client function so that it is able to extract the individual parts of multipart MIME mail from an IMAP server (in this embodiment, emailManager 3202) according to the MIME type. The email object 3203 also has the function of delivering print data to a PrinterManager object 3205.

A PrinterDB 3204 stores information of the individual users and provides a database access function to the PrinterManager 3205, a UserHTMLPage 3209, and an HTMLPage 3210. The information of the individual users includes the following items.
UserID (user name when registering in the network printing system)
UserPassword (password when registering in the network printing system)
UserTelNumber (telephone number when registering in the network printing system)
AdapterID (ID unique to the adapter)
AdapterTelNumber (the telephone number of the terminal to which the adapter is connected)
PrinterID (printer ID obtained via IEEE 1284)
The above-mentioned items of information are set for each user when registering in the network printing system.

The PrinterManager object 3205 has an ID of a PrinterDriver object 3206. By using functions of managing (creating, erasing, counting, stopping, etc.) the PrinterDriver object 3206 and the user ID (in this case, the e-mail address) as keys, the PrinterManager object 3205 is able to search the PrinterDB 3204, and creates a suitable PrinterDriver object according to the PrinterID obtained from the DB and delivers print data. The creation of the PrinterDriver object is for the selection of a printer driver corresponding to the printer and for starting the selected printer driver.

The PrinterDriver object 3206 is created for each printer according to the PrinterID. The PrinterManager object 3205 retains items of information, such as the AdapterTelNumber, the AdapterID, and the PrinterID corresponding to the user ID, obtained from the PrinterDB 3204, and converts the print data to a format suitable for a specific printer. In printing an attached file, the PrinterManager object 3205 determines the application type of the attached file from the MIME type, and starts the corresponding application so as to convert the attached file to the corresponding format.

A PrintJob object 3207 is created for each PrinterDriver object 3206. The PrintJob object 3207 retains items of information, such as the AdapterTelNumber, the AdapterID, and the PrinterID corresponding to the user ID, acquired in creating the PrintJob 3207, and also retains print data created by the PrinterDriver object 3206. Thus, the PrintJob object 3207 has the functions of queuing print data and outputting it to the adapter 108 according to the AdapterTelNumber.

A WebBrowser object 3208 has a WWW browsing function. In response to a message from the PrinterDriver object 3206 to obtain an HTML, the WebBrowser object 3208 obtains an HTML from a designated URL and performs rendering.

The UserHTMLPage object 3209, which is a WebPage created for each user, possesses user information, such as a default printer. The UserHTMLPage object 3209 also has the functions of reflecting the print status using the CGI, controlling a print job by sending a job control message to the PrinterDriver object 3206, and updating the user setting by reflecting data received by using the hypertext transfer protocol (HTTP) in the DB. Additionally, in response to a request from the PrinterManager object 3205, the UserHTMLPage object 3209 also serves the function of reflecting the print status in the user homepage of the network printing system.

The HTMLPage 3210 is a homepage of the domain which forms the network printing system of this embodiment, and has the user registering function.

A RADIUSServer 3211 is equivalent to the RADIUS server 3105 shown in Fig. 4. A PortMaster (Radius client) 3212 is equivalent to the communication server 3103 shown in Fig. 4.

A PDA 3201, which is a communication terminal, is equivalent to the PDA 101 shown in Fig. 1, and at least has the mail sending/receiving function and may also be provided with an HTML browsing function.

An Adapter 3213 is equivalent to the adapter 108 shown in Fig. 1, and a Printer 3214 is equivalent to the printer 109 shown in Fig. 1.

Physically, the PDA 3201 and the Adapter 3213 are connected to the network printing system via a communication terminal (not shown), such as a PHS.

A description is now given, with reference to Fig. 5, of the process of receiving e-mail, creating a print job, and sending it to the adapter 108 by the application server 105.

A user of the network print services sends e-mail to be printed by using a mail terminal, such as the PDA 3201. The e-mail is sent to the address of the service desired by the user, as discussed above.

In practice, the e-mail sent to the application server 105 is received by the mail server 3202. As stated above, the mail server 3202 of this embodiment has the IMAP server function. Thus, the mail server 3202 reports the arrival of mail to the email object 3203 provided for each user, which has the IMAP client function and is disposed within the network print server 3104, according to the IMAP protocol.

The email object 3203 acquires a target MIME part corresponding to the mail address according to the IMAP protocol. The obtained data is then transferred to the PrinterManager object 3205.

The PrinterManager object 3205 searches the PrinterDB 3204 for the user information (for example, the ID of the default printer) by using the user ID indicated by the e-mail account. Subsequently, the PrinterManager object 3205 creates the PrinterDriver object 3206 associated with the obtained default printer.

The PrinterDriver object 3206 obtains data to be printed from the PrinterManager object 3205, and converts it to print data so as to create the PrintJob object 3207.

If the data to be printed is an URL, the PrinterDriver object 3206 sends the URL to the WebBrowser object 3208. The WebBrowser object 3208 then acquires the content of the URL (such as HTML or XML) designated through the Internet, and returns it to the PrinterDriver object 3206 after performing rendering on the content. The PrinterDriver object 3206 converts the rendered data to print data, thereby creating the PrintJob object 3207.

If the content of the URL has not been successfully obtained due to, for example, the elapse of a predetermined period because of a poor communication status or a mistake in the address, the WebBrowser object 3208 returns an error signal to the PrinterDriver object 3206. The PrinterDriver object 3206 also notifies the PrinterManager object 3205 that an error has occurred, and the email object 3203 composes mail indicating the occurrence of an error and sends the mail to the user.

Thereafter, the print data stored in the PrintJob object 3207 is transferred to the adapter 108. In this embodiment, there are two approaches to transferring the print data, that is, by the application server 105 calling and by the adapter 108 calling.

The print data can be transferred by adapter 108 (3213) calling when the adapter 108 logs in the application server 105. In this case, the Adapter 3213 telephones the PortMaster 3212 to log in the application server 105 by using the AdapterID, the AdapterTelNumber, and the PrinterID as authentication keys. The authentication keys are transferred from the PortMaster 3212 to the PrinterDB 3204 via the RADIUSServer 3211 and are checked in the PrinterDB 3204. The connection between the Adapter 3213 and the application server 105 is established by the transmission control protocol/internet protocol (TCP/IP), and the internet protocol (IP) address assigned to the Adapter 3213 by the PortMaster 3212 is a private address of the network printing system of this embodiment.

The Adapter 3213, which was allowed to log in according to the above-described process, sends a print-data request message to the PrinterManager object 3205.

Upon receiving the message, the PrinterManager object 3205 specifies the PrintJob object 3207 that matches the AdapterID, the AdapterTelNumber, and the PrinterID corresponding to the Adapter 3213, and sends a message to the PrintJob object 3207 to instruct it to send the data. This message contains the IP address of the Adapter 3213.

The PrintJob object 3207 sends the print data to the designated IP address, i.e., to the address of the Adapter 3213, according to the LPR protocol.

As the other approach to transferring the print data, when the application server 105 calls, it requests the PortMaster 3212 to call the PrinterTelNumber possessed by the PrintJob object 3207.

In response to a request from the application server 105, the PortMaster 3212 telephones the PrinterTelNumber, in which case, the PortMaster 3212 reports the telephone number of the network printing system to the Adapter 3213. After obtaining the telephone number of the network printing system, the Adapter 3213 temporarily disconnects communications, and then calls back the acquired telephone number. The subsequent operation is similar to that when the adapter 108 performs calling.

The aforementioned four mail addresses, the adapter 108 connected to the printer 109, and the telephone number of the mobile terminal 107 are registered in the database in correspondence with each other. Accordingly, the telephone number can be identified from the received mail address, and the print data can be created and sent to the adapter 108 by using the mobile terminal 107 via a public communication network.

The print job stored in the PrintJob object 3207 may be created in units of pages, considering that only one piece of paper is stored in the Printer 3214 (the printer in which sheets of paper are manually fed one by one). In this case, the printer type is identified based on the PrinterID (printer type information) so as to determine the unit for feeding the print job. For example, multiple-page data is sent as one job to a cassette-feeding-type printer, while single-page data is sent as one job to a manual-feeding-type printer. With this arrangement, the re-sending of data, which is required when an error or a jam occurs, can be easily performed, thereby facilitating the recovery from an error or a jam.

While sending print data from the PrintJob object 3207 to the Adapter 3213, an error, such as paper running out, may be reported from the Adapter 3213 to the PrintJob object 3207. In this case, the PrintManager object 3205 receives an error report from the Adapter 3213, and sends to the PrinterDriver object 3206 a message which instructs the PrinterDriver object 3206 to stop sending the print data, thereby interrupting the transferring of the print data from the PrintJob object 3207 to the Adapter 3213.

In this case, the PrinterDriver object 3206 may request the email object 3203 to report the occurrence of an error to the user. The PrinterDriver object 3206 may also request the UserHTMLPage object 3209 to update the print status reflecting an error within the homepage of the network printing system.

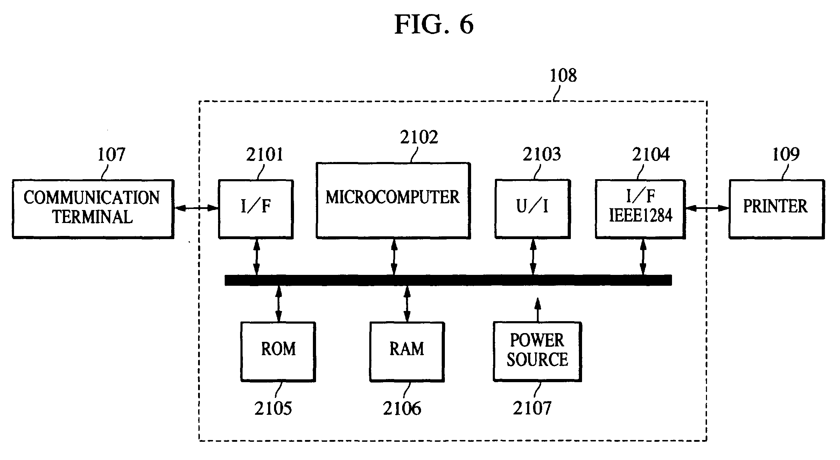

Fig. 6 is a block diagram illustrating the electrical configuration of the adapter 108.

The adapter 108 used in this embodiment is connected to the mobile communication terminal 107 via a communication terminal interface 2101 and connects the terminal 107 to an internal bus 2108. This communication terminal interface 2101 absorbs different electrical characteristics of various communication terminals when being connected to the internal bus 2108.

That is, the adapter 108 is used for converting a protocol of a data format of a communication interface, such as a PHS, to a protocol of a data format of a printer interface, such as the Centronics interface.

The printer 109 is connected to the internal bus 2108 of the adapter 108 via a printer interface 2104. Connected to the internal bus 2108 are a microcomputer 2102 for controlling overall operation, a read only memory (ROM) 2105 for storing the internal operation program and the content of setting, a random access memory (RAM) 2106 for temporarily storing an area for running a program, data to be sent, and received data, and a user interface (U/I) 2103 for setting, registering, and displaying the user operation performed on the adapter 108. The ROM 2105 is an overwritable ROM, and not only adds and modifies software, but also adds new protocols.

In obtaining new data, the ROM 2105 downloads the data via the interface 2101 or 2104 so as to overwrite the internal program. The ROM 2105 also stores the telephone number required for connecting the adapter 108, the adapter ID, and so on.

The microcomputer 2102 has a capacity for implementing modems and protocols by software. A power source 2107 is used for operating the adapter 108.

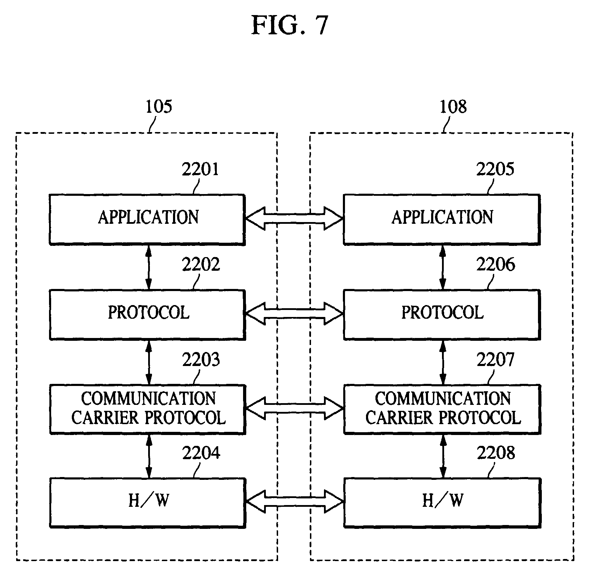

Fig. 7 illustrates the configuration of the software implemented on the adapter 108. In the adapter 108, which is shown on the right side of Fig. 7, a communication network (carrier) protocol 2207 for establishing a connection with the mobile communication terminal 107 is implemented on the layer higher than an hardware (H/W) 2208, which is physically connected to the mobile communication terminal 107. In practice, the adapter 108 is connected to the communication network 103 via the mobile communication terminal 107. Accordingly, the communication network protocol 2207 controls calling for connecting the adapter 108 to the communication network 103, receiving incoming calls from the communication network 103, disconnecting the adapter 108 from the communication network 103, etc.

A protocol 2206 is implemented on the layer higher than the communication network protocol 2107 and includes the TCP/IP and a protocol unique to the carrier. An application 2205 communicates with the communication network 103 via the protocol 2206.

In this embodiment, since the communication network protocol 2207, the protocol 2206, and the application 2205 are implemented by software, they are implemented by the microcomputer 2102, the ROM 2105, and the RAM 2106 shown in Fig. 6.

The communication control operation performed in accordance with the present invention is as follows.

In this embodiment, the adapter 108 and the printer 109 are connected with the IEEE 1284 interface 2104. When connected to the printer 109, the adapter 108 obtains the printer ID from the printer 109 by negotiations of IEEE 1284 of the interface 2104.

If the printer 109 is not working since it is not powered on, a predetermined printer ID is set, or the use of the adapter 108 is prohibited since the printer 109 is unknown.

The acquired (or set) printer ID is stored in the ROM 2105 or the RAM 2106 via the internal bus 2108. If the printer 109 does not have an automatic detecting function, the ID cannot be correctly obtained, in which case, an arbitrarily set ID is stored in the ROM 2105 or the RAM 2106. This is set by the user or is determined by the application server 105. The acquired ID is also used as an ID for authentication, which will be discussed below.

A description is given below of the communication control operation when, for example, data communications are performed between the adapter 108 and the application server 105.

An external interface provided for the mobile communication terminal 107 externally controls, via the interface 2101, calling for the communication network 103, receiving incoming calls, and disconnecting the communication terminal 107 from the communication network 103.

The microcomputer 2102 controls calling for the mobile communication terminal 107, receiving incoming calls, and disconnecting the adapter 108 from the communication terminal 107 via the interface 2101. In response to a request from an external source, the mobile communication terminal 107 outputs the telephone number thereof via the external interface. The adapter 108 is then able to obtain the telephone number of the connected communication terminal, or it may reject the connection if the telephone number is not a correct one. Either the application server 105 or the adapter 108 may call the mobile communication terminal 107.

The telephone number is received from the application server 105 as data, and the adapter 108 calls back the application server 105 by using the same telephone number after disconnecting the communications.

Both the application server 105 and the mobile communication terminal 107 are connected to the communication network 103. If the mobile communication terminal 107 is a wireless type, it is connected to the communication network 103 via a wireless base station.

The adapter 108 calls the telephone number through the mobile communication terminal 107 so that the adapter 108 can be connected to the application server 105. Then, the mobile communication terminal 107 attempts to connect to the communication network 103 by the above-described telephone number. In this case, the establishment of the connection is based on the type of communication network.

When the communication terminal of the application server 105 receives a call from the mobile communication terminal 107, the connection between the adapter 108 and the application server 105 in the communication network 103 is established.

Authentication is then performed on the connection by using a protocol higher than the communication network 103 if, for example, the telephone number of the communication terminal 107 that has called the application server 105 is not a registered number.

In this embodiment, authentication is made by using an authentication packet. The connection to the application server 105 is authenticated by using "adapter authentication". The information used for authentication is prepared as an "authentication packet", which is then sent from the adapter 108 to the application server 105 when they are connected.

The authentication packet includes the following items of information: AdapterID, AdapterTelNumber, and iPrinterID. The iPrinterID is obtained by negotiations of the IEEE 1284 interface, as discussed above, and is used not only for performing authentication, but also for selecting a data-creating driver.

When the connection between the application server 105 and the adapter 108 and communications between protocols are established, communications are performed between the corresponding layers of the application server 105 and the adapter 108, as shown in Fig. 7.

After the communications have been established and authentication has been successfully performed, it is ready to start data communication. Thus, the adapter 108 processes data sent from the application server 105. The adapter 108 also sends the status of the connected printer 109 and the status of the adapter 108 to the application server 105. By referring to those statuses, the application server 105 converts the format of data to be sent, or divides or compresses the data. Also, the adapter 108 notifies error information, such as paper running out or ink running low, to the application server 105 as a status.

In the layer higher than the protocol, data sent from the application server 105, which contains a command for controlling the printer 109 or the adapter 108, is obtained. Instead of controlling the printer 109 or the adapter 108 by this command, the whole data may be delivered to the printer 109 and processed therein.

For example, the adapter 108 may output the data containing a printer command to the printer 109 without changing the data, and the printer 109 performs printing.

The application server 105 enlarges or reduces the data size in accordance with a paper size of the printer 109, so that the data can be easily modified.

Additionally, by reporting the type of ink stored in the printer 109 to the application server 105, the color mode or the monochrome mode can be automatically switched in the application server 105. Simultaneously, a warning may be issued via the user interface 2013.

As discussed above, the content of e-mail data is directly converted into print data, or the content of e-mail data is interpreted as a command and certain processing is executed on the command so as to create print data. With this arrangement, by merely modifying the data output from the application server 105, the processing content of the data to be output to the adapter 108 and the printer 109 can be changed. Additionally, complicated processing or functions which are not provided for the adapter 108 can be executed in the application server 105, thereby reducing the load in the adapter 108 to a minimal level.

The flow of the processing content of each device is discussed below. The program corresponding to each flow is stored in a memory of each device and is run by a central processing unit (CPU).

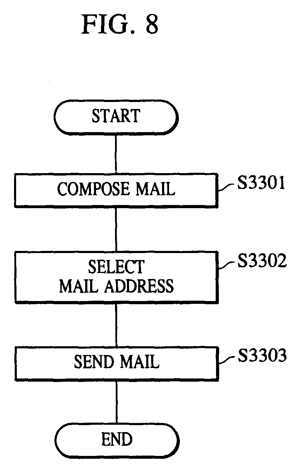

Fig. 8 is a flow chart illustrating the client processing performed by the PDA 101 shown in Fig. 1. In step S3301, a client composes a document to be printed as mail. In step S3302, the client selects the printing function, such as printing text, printing an attached file, etc. Then, in step S3303, the client sends the mail to the address implementing the selected printing function.

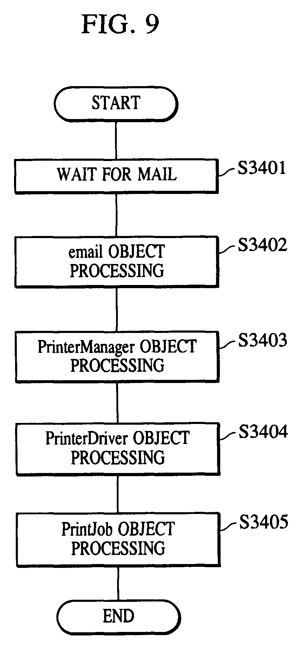

Fig. 9 is a flow chart illustrating the process executed by the application server 105, and more specifically, the process executed by the application server 105 when typical mail printing functions are implemented in the network printing system.

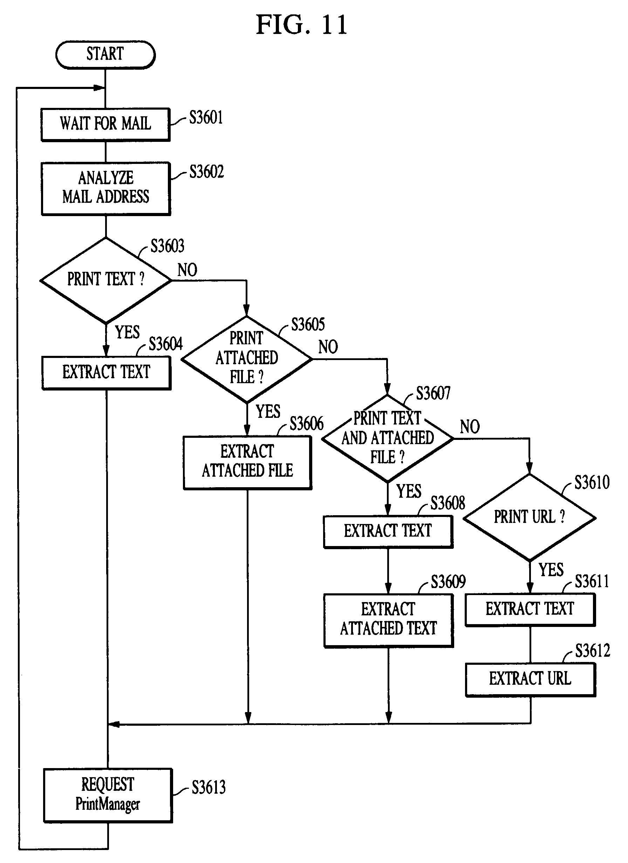

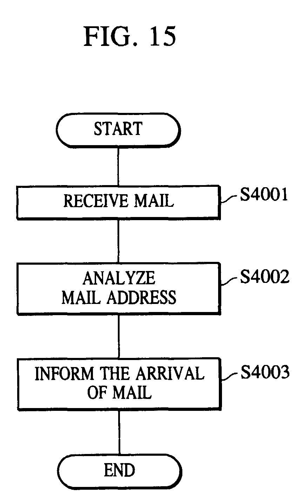

In step S3401, the MailServer 3202 having a simple mail transfer protocol (SMTP) server function and the IMAP server function waits for mail to be received. Upon receiving mail, the MailServer 3202 notifies the email object 3203 according to the IMAP that the mail has been received. Details of step S3401 are shown in Fig. 15. When receiving a notification that the mail has been received from the MailServer 3202, the email object 3203 having the IMAP client function receives required part from the MailServer 3202. Thereafter, in step S3402, the email object 3203 gives a printing instruction to the PrinterManager 3205. Details of step S3402 are shown in Fig. 11.

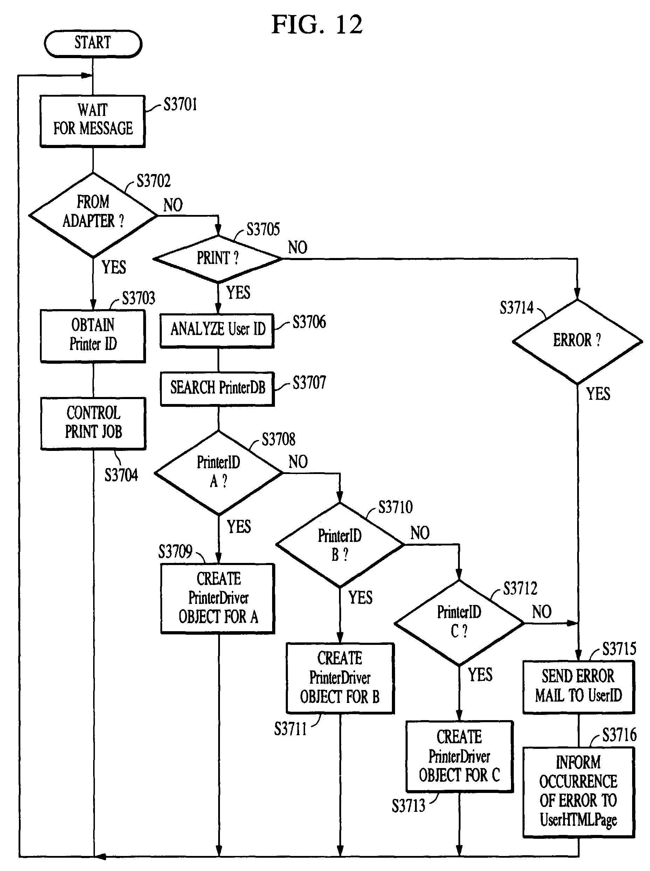

In response to the printing instruction from the email object 3203, in step S3403, the PrinterManager 3205 refers to the PrinterDB 3204 from the UserID so as to obtain the print ID consisting of the UserID, the UserTelNumber, the UserPassword, the AdapterID, the AdapterTelNumber, and the PrinterID. Then, the PrinterManager 3205 creates the PrinterDriver object 3206 indicated by the PrinterID and delivers data to be printed to the PrinterDriver object 3206. Details of step S3403 are shown in Fig. 12.

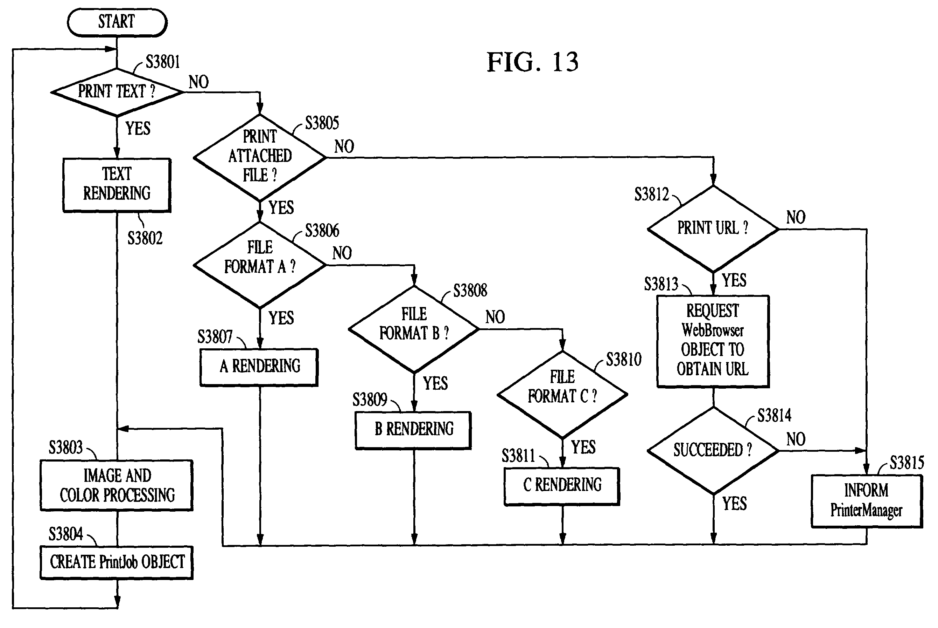

In step S3404, if the printing function is for printing text, the PrinterDriver object 3206 performs rendering on text. If the printing function is for printing an attached file, the PrinterDriver object 3206 runs a suitable application and performs rendering. If the printing function is for printing a URL, the PrinterDriver object 3206 requests the WebBrowser object 3208 to obtain an HTML and to perform rendering on the HTML. Thereafter, the PrinterDriver object 3206 performs image processing and color processing so as to create the PrintJob object 3207. Details of step S3404 are shown in Fig. 13.

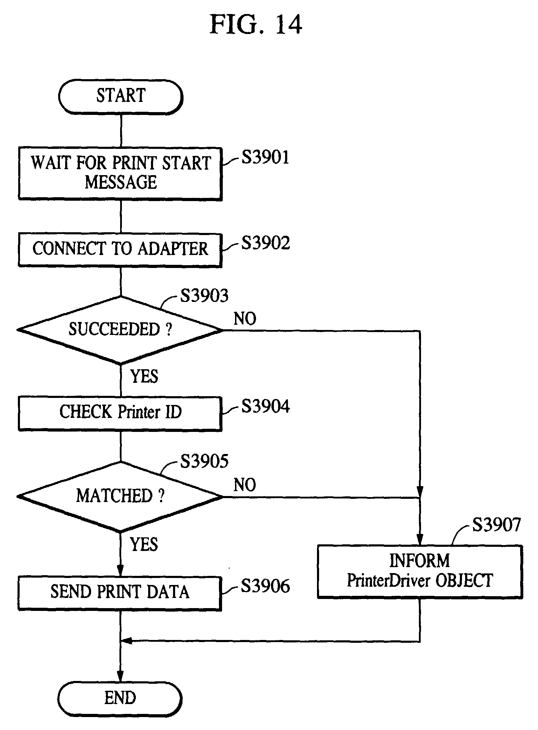

In step S3405, the PrintJob object 3207 connects itself to the adapter 108 according to the printer ID and attempts to output print data. Details of step S3405 are shown in Fig. 14.

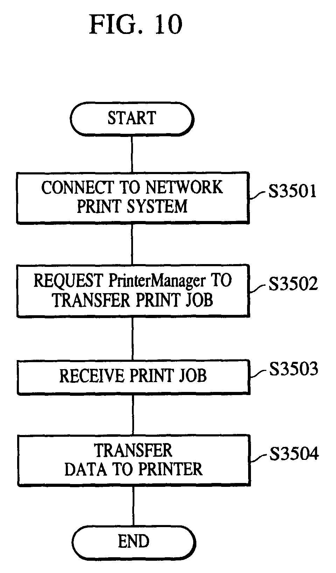

Fig. 10 is a flow chart illustrating the process performed by the adapter 108. In step S3501, the adapter 108 is connected to the network printing system by calling the adapter 108 itself or calling back the application server 105. Then, in step S3502, the adapter 108 performs authentication by using the RADIUSServer 3211, and when connected, the adapter 108 requests the PrinterManager object 3205 to transfer a print job. In step S3503, the adapter 108 then waits for the print job to be transferred from the Printjob object 3207. In step S3504, upon receiving the print job, the adapter 108 sends the print data to the printer 109 via the IEEE 1284 interface. Simultaneously, the adapter 108 handles a status, such as an error, sent from the printer 109.

Fig. 15 is a flow chart illustrating the process executed by the mail server 3106 within the application server 105. In step S4001, the mail server 3106 having the SMTP server function and the IMAP server function provides e-mail sending/receiving services, and it waits for mail to be received. In step S4002, upon receiving mail, the mail address is analyzed. In step S4003, the mail server 3106 then notifies the IMAP client 3203 that the mail has been received.

Fig. 11 is a flow chart illustrating the process executed by the email object 3203 of the network print server 3104 within the application server 105.

In step S3601, the email object 3203, which is created for each user, waits for a notification of the arrival of e-mail from the mail server 3106.

In step S3602, upon receiving the e-mail, the email object 3203 analyzes the mail address. In step S3603, S3605, S3607, and S3610, the email object 3203 selects a printing function, such as printing text, an attached file, text and an attached file, or a URL.

For example, all of the following mail addresses are received by the user, tama.
1. tama@mnp.co.jp
2. tamaA@mnp.co.jp
3. tamaB@mnp.co.jp
4. tamaC@mnp.co.jp
It is now assumed that address 1 is for printing text, address 2 is for printing attached files, address 3 is for printing text and attached files, and address 4 is for printing URLs. The email object 3203 created for the user, tama, analyzes these addresses and executes necessary processing, as stated below.

If it is determined in step S3603 that the mail address is for printing text, the process proceeds to step S3604 in which the email object 3203 extracts the text part from the mail server 3106 by designating the MIME type. Then, in step S3613, the email object 3203 adds a printing function ID indicating that text is to be printed, and requests the PrinterManager 3205 to perform processing.

If it is found in step S3605 that the mail address is for printing an attached file, the process proceeds to step S3606 in which the email object 3203 extracts the attached file from the mail server 3106 by specifying the MIME type. Then, in step S3613, the email object 3203 adds a printing function ID indicating that an attached file is to be printed, and requests the PrinterManager 3205 to perform processing.

If it is found in step S3607 that the mail address is for printing text and an attached file, the email object 3203 extracts the text part and an attached file from the mail server 3106 by designating the MIME type in steps S3608 and S3609. Then, in step S3613, the email object 3203 adds a printing function ID indicating that text and an attached file are to be printed, and requests the PrinterManager 3205 to execute processing.

If it is determined in step S3610 that the address is for printing an URL, the email object 3203 extracts the text part from the mail server 3106 by specifying the MIME type in step S3611 and also extracts the URL from the text in step S3612. Then, in step S3613. the email object 3203 adds a printing function ID indicating that the URL is to be printed, and requests the PrinterManager 3205 to perform processing.

Fig. 12 is a flow chart illustrating the process performed by the PrinterManager 3205 of the network print server 3104 within the application server 105.

In step S3701, the PrinterManager 3205 waits for a message from the email object 3203 or the Adapter 3213 to be received.

If it is found in step S3702 that a message is from the Adapter 3213, the PrinterManager 3205 checks the AdapterID and the PrinterID in step S3703. Then, in step S3704, the PrinterManager 3205 sends a message to the PrinterDriver object 3206 and controls the operation (stop, restart, delete, etc.) according to the type of message, thereby performing control (stop, restart, delete, etc.) of the print job.

If it is determined in step S3705 that a message is from the email object 3203 and indicates a printing instruction, the PrinterManager 3205 checks the UserID in step S3706, and searches the PrinterDB 3204 in step S3707. The ID checked by the PrinterManager 3205 includes a print ID consisting of the UserID, the UserTelNumber, the UserPassword, the AdapterID, the AdapterTelNumber, and the PrinterID.

If it is found in step S3708 that the PrinterID of the print ID is printer A, the PrinterDriver object 3206 for printer A is created in step S3709.

If it is found in step S3710 that the PrinterID of the print ID is printer B, the PrinterDriver object 3206 for printer B is created in step S3711.

If it is found in step S3712 that the PrinterID of the print ID is printer C, the PrinterDriver object 3206 for printer C is created in step S3713.

Printer A, printer B, and printer C are, for example, an ink jet printer made by company A, a laser beam printer made by company B, and a thermal printer made by company C, respectively. The PrinterDriver object 3206 matching the corresponding printer is created (the corresponding driver is selected and started).

If it is determined in step S3714 that the message received by the PrinterManager object 3205 is an error message, error mail corresponding to the type of error is sent to the UserID in step S3715. Then, in step S3716, the PrinterManager object 3205 notifies the UserHTMLPage object 3209 that an error has occurred, and requests the UserHTMLPage object 3209 to reflect the corresponding status in the user homepage.

Fig. 13 is a flow chart illustrating the process performed by the PrinterDriver object 3206 of the network print server 3104 within the application server 105.

Upon receiving the print data, the corresponding MIME type, the print ID, and the printing function ID (text/attached file/URL) from the PrinterManager object 3205, the PrinterDriver object 3206 is started.

If it is determined in step S3801 that the printing function ID and the print data indicate text, the PrinterDriver object 3206 performs rendering on the text in step S3802. The PrinterDriver object 3206 then performs image processing and color processing in step S3803, and creates the PrintJob object 3207 in step S3804.

If it is found in step S3805 that the printing function ID and the print data represent an attached file, the PrinterDriver object 3206 determines the file format according to the MIME type.

If it is found in step S3806 that the file format is format A, the PrinterDriver object 3206 runs the rendering application for format A and performs rendering in step S3807. Then, the PrinterDriver object 3206 performs image processing and color processing in step S3803, and creates the PrintJob object 3207 in step S3804.

If it is determined in step S3808 that the file format is format B, the PrinterDriver object 3206 runs the rendering application for format B and performs rendering in step S3809. Then, the PrinterDriver object 3206 performs image processing and color processing in step S3803, and creates the PrintJob object 3207 in step S3804.

If it is determined in step S3810 that the file format is format C, the PrinterDriver object 3206 starts the rendering application for format C and performs rendering in step S3811. Then, the PrinterDriver object 3206 performs image processing and color processing in step S3803, and creates the PrintJob object 3207 in step S3804.

Format A, format B, and format C may be, for example, PostScript made by Adobe Systems Incorporated, WORD made by Microsoft Corporation, Joint Photographic Experts Group (JPEG), and Graphics Interchange Format (GIF).

If it is determined in step S3812 that the printing ID indicates an URL, the PrinterDriver object 3206 requests the WebBrowser object 3208 to acquire the URL in step S3813.

If it is determined in step S3814 that the rendered HTML data of the web page indicated by the URL has been successfully obtained, the PrinterDriver object 3206 performs image processing and color processing in step S3803, and creates the PrintJob object 3207 in step S3804.

If the printing function ID is unknown, or if a message indicating that the HTML data of the web page designated by the URL has not been successfully obtained is sent from the WebBrowser object 3208, the PrinterDriver object 3206 notifies the PrinterManager object 3205 that an error has occurred, and stops the printing operation.

Fig. 14 is a flow chart illustrating the process executed by the PrintJob object 3207 of the network print server 3104 within the application server 105.

In step S3901, the PrintJob object 3207 waits for a print start message to be received.

In step S3902, upon receiving the print start message after completing the processing of the PrinterDriver object 3206, the PrintJob object 3207 attempts to connect itself to the Adapter 3213 via the communication server 3103.

If it is found in step S3903 that the PrintJob object 3207 has been successfully connected to the Adapter 3213, the PrintJob object 3207 checks the PrinterID of the Adapter 3213 in step S3904. If it is determined in step S3905 that the PrinterID has matched, the PrintJob object 3207 sends the print data to the Adapter 3213 in step S3906. In this case, if the PrintJob object 3207 determines from the PrinterID that the printer is not provided with a paper tray, it may divide the print job into page units. Thereafter, the PrintJob object 3207 sends the print data to the Adapter 3213 by using a protocol, such as LPR.

If it is found in step S3903 that the PrintJob object 3207 has not been successfully connected to the Adapter 3213, or if it is found in step S3905 that the PrinterID is not a correct one, the process proceeds to step S3907 in which the PrintJob object 3207 notifies the PrinterDriver object 3206 that an error has occurred.

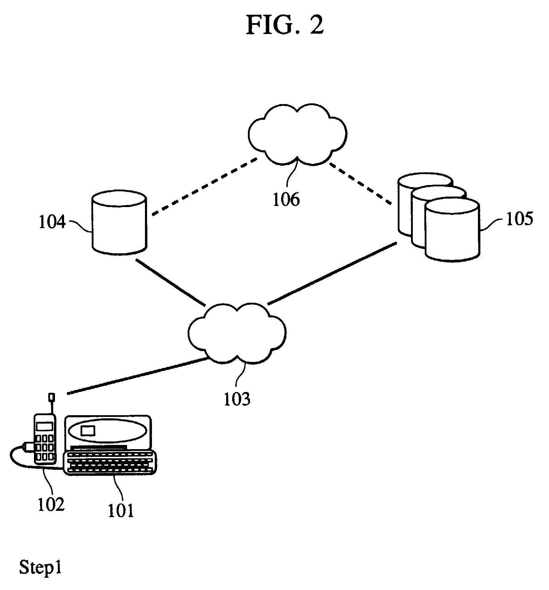

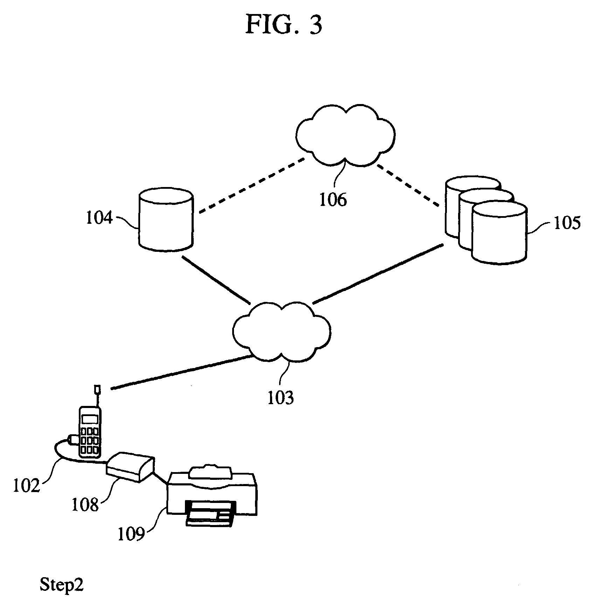

Figs. 2 and 3 are schematic diagrams illustrating a system according to another embodiment of the present invention.

The elements similar to those shown in Fig. 1 are designated by like reference numerals. Step 1 and step 2 of Figs. 2 and 3, respectively, show the same system at different times. More specifically, the mobile communication terminal 102 is shared by the adapter 108 and the PDA 101 in this system, and Fig. 2 illustrates the system when the PDA 101 is connected to the mobile communication terminal 102, while Fig. 3 illustrates the system when the adapter 108 is connected to the mobile communication terminal 102.

The user operates the PDA 101 to send mail to be printed. After transferring mail data and disconnecting the line, the user connects the mobile communication terminal 102 to the adapter 108 and the printer 109. The user also operates the switch provided for the adapter 108 so as to connect it to the application server 105. This enables the user to obtain print data from the application server 105 and to print out the mail data.

Various modifications may be made to the above-described embodiments. For example, a personal computer may be substituted for the PDA 101. Although in the foregoing embodiments the mobile communication terminal 102 is a wireless type, such as a PHS or a personal digital cellular (PDC), it may be a cable-type terminal, such as a modem. The mobile communication terminal 102 and the PDA 101 may be integrated into a single device which sends and receives mail by being connected to the communication network 103. Additionally, although in the foregoing embodiments the PDA 101 and the mobile communication terminal 102 are used as a system for sending and receiving mail, this system may be constructed by a modem and a computer system. Accordingly, a local area network (LAN) may be constructed instead of the communication network 103, in which case, advantages similar to those exhibited by the aforementioned embodiments are obtained.

The type of the printer 109 is not a limitation to implement the present invention, and any type of printer, such as a laser beam printer and an ink jet printer, may be used. The same applies to the interface 2104 between the adapter 108 and the printer 109, and the interface 2104 is not restricted to the IEEE 1284 interface, and may be RS232C, a Universal Serial Bus (USB), Infrared Data Association (IRD), or an IEEE 1394 interface may be used.

It is also possible to integrate the adapter 108 into the printer 109.

In the above-described embodiments, the print data is converted in the application server 105. However, it may be converted in the adapter 108, in which case, advantages similar to those exhibited by the foregoing embodiments can be offered.

As a medium for storing software control programs implementing the above-described flows for achieving the present invention, not only a ROM, but also a floppy disk, a hard disk, an optical disc, a CD-ROM, a CD-R, a magnetic disk, a non-volatile memory card, etc., may be used.

As is seen from the foregoing description, the network printing system of the present invention offers the following advantages.

As discussed above, the network printing system is formed of an application server for receiving e-mail, a printer adapter being connected to the application server via a communication network, and a printer. It is thus possible to allow e-mail terminals without a printing function to perform printing. E-mail terminals without a function of opening attached files or additional information (such as homepages on the Internet) are able to refer to attached files and additional information.

Merely by adding a service to the application server, all the e-mail terminals with or without a printing function are able to receive the added service. Since conventional e-mail protocols are applied to this network printing system, the above-described functions can be provided without the need to modify conventional e-mail terminals.

It is thus possible to provide a simply constructed printing system which allows users utilizing a cellular telephone or a PDA without a printing function to perform printing even if the users do not own a PC.

It is possible to enhance user operability by allowing printing to be performed with a minimal amount of character input in a mobile terminal. User operability can also be improved by enabling the user utilizing a cellular telephone or a PDA to print homepages without opening them on a PC.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. A printing system comprising:
an application server for receiving electronic mail and for converting the received electronic mail into print data;
a printer adapter for receiving the print data from said application server via a communication network and for converting the received print data into a data format matching an interface for a printer to which the print data is to be sent; and
a printer for printing the print data converted by and sent from said printer adapter.

2. A printing system according to claim 1, wherein contents of the electronic mail to be printed is sent to said application server from a mobile terminal by using the electronic mail.

3. A printing system according to one of claims 1 and 2, wherein the contents to be printed comprises electronic mail text, an attached file, and an Internet homepage.

4. A printing system according to claim 1, wherein said printer is selected by an electronic-mail address.

5. A printing system according to claim 1, wherein a type of printing is designated by an e-mail address.

6. A printing system according to claim 5, wherein the type of printing comprises printing electronic-mail text, printing an attached file, printing electronic-mail text and an attached file, and printing a uniform resource locator.

7. A printing system according to claim 1, wherein the print data is sent from said application server to said printer adapter via a mobile terminal by using the communication network.

8. A printing system according to claim 1, wherein said application server converts a content of the received electronic mail into the print data which is optimal for said printer according to information concerning a status or a type of said printer, and sends the print data to said printer adapter by using the communication network.

9. A printing system according to claim 8, wherein said application server comprises means for obtaining the information concerning the status or the type of said printer by using the communication network.

10. A printing system according to claim 1, wherein said application server divides a job of the print data in units of pages when the print data corresponds to a plurality of pages, and sends the divided job to said printer.

11. A printing system according to claim 1, wherein said application server stores a print job of the electronic mail from a registered user, and selects the print job to provide a printing instruction.

12. A printing system according to claim 1, wherein said printer adapter is contained in said printer.

13. A printing control apparatus comprising:
analyzing means for analyzing an address of received electronic mail; and
determining means for determining a type of printing of the received electronic mail according to a result of an analysis conducted by said analyzing means.

14. A printing control apparatus according to claim 13, wherein the type of printing determined by said determining means comprises printing electronic-mail text, printing an attached file, printing electronic-mail text and an attached file, and printing an Internet homepage.

15. A printing control apparatus according to one of claims 13 and 14, wherein said determining means determines the type of printing of the received electronic mail based on a mail address account.

16. A printing control apparatus comprising:
input means for inputting an instruction to print a designated Internet homepage;
identifying means for identifying information concerning a status or a type of printer;
acquiring means for acquiring data of the designated Internet homepage;
processing means for processing the data acquired by said acquiring means based on the information concerning the status or the type of printer identified by said identifying means; and
output means for outputting the data processed by said processing means to the printer.

17. A printing control apparatus according to claim 16, wherein said processing means processes data corresponding to a plurality of pages as data corresponding to a plurality of jobs.

18. A printing control apparatus according to one of claims 16 and 17, wherein the instruction to print the designated Internet homepage is provided by sending electronic mail.

19. A printing control apparatus according to claim 16, wherein said output means outputs the data based on a call from the printer after performing authentication.

20. A printing control apparatus according to claim 16, wherein said processing means processes data corresponding to a plurality of pages as data corresponding to a plurality of jobs or processes data corresponding to a plurality of pages as data corresponding to a single job according to the type of printer.

21. A printing control apparatus according to claim 16, wherein said output means outputs the data when said printing control apparatus calls and reports a telephone number of said printing control apparatus to said printer and when said printer calls back the reported telephone number.

22. A printing control apparatus according to claim 16, wherein said processing means selects and starts a printer driver corresponding to said printer, and processes the data by the started driver.

23. A printing control method comprising:
an analyzing step of analyzing an address of received electronic mail; and
a determining step of determining a type of printing of the electronic mail according to a result of an analysis conducted in said analyzing step.

24. A printing control method according to claim 23, wherein the type of printing determined in said determining step comprises printing electronic-mail text, printing an attached file, printing electronic-mail text and an attached file, and printing an Internet homepage.

25. A printing control method according to one of claims 23 and 24, wherein said determining step determines the type of printing of the received electronic mail based on a mail address account.

26. A printing control method comprising:
an input step of inputting an instruction to print a designated Internet homepage;
an identifying step of identifying information concerning a status or a type of printer;
an acquiring step of acquiring data of the designated Internet homepage;
a processing step of processing the data acquired in said acquiring step based on the information concerning the status or the type of printer identified in said identifying step; and
an output step of outputting the data processed in said processing step to the printer.

27. A printing control method according to claim 26, wherein said processing step processes data corresponding to a plurality of pages as data corresponding to a plurality of jobs.

28. A printing control method according to one of claims 26 and 27, wherein the instruction to print the designated Internet homepage is provided by sending electronic mail.

29. A printing control method according to claim 26, wherein said output step outputs the data based on a call from the printer after performing authentication.

30. A printing control method according to claim 26, wherein said processing step processes data corresponding to a plurality of pages as data corresponding to a plurality of jobs or processes data corresponding to a plurality of pages as data corresponding to a single job according to the type of printer.

31. A printing control method according to claim 26, wherein said output step outputs the data when said printing control apparatus calls and reports a telephone number of said printing control apparatus to said printer and when said printer calls back the reported telephone number.

32. A printing control method according to claim 26, wherein said processing step selects and starts a printer driver corresponding to said printer, and processes the data by the started driver.

33. A printing control apparatus according to claim 13, further comprising means for acquiring data based on a uniform resource locator contained in mail text, for processing the acquired data, and for sending the processed data to a printer when said determining means determines the type of printing to be printing an Internet homepage.

34. A printing control method according to claim 23, further comprising the step of acquiring data based on a uniform resource locator described in mail text, processing the acquired data, and sending the processed data to a printer when said determining step determines the type of printing to be printing an Internet homepage.

35. A printing control apparatus according to claim 13, wherein electronic-mail text is to be printed when said determining means determines that an Internet homepage is to be printed and when a uniform resource locator is not described in the electronic-mail text.

36. A printing control method according to claim 23, wherein electronic-mail text is to be printed when said determining step determines that an Internet homepage is to be printed and when a uniform resource locator is not described in the electronic-mail text.

37. A printing system according to one of claims 1 and 2, wherein said application server sends error mail to a mobile terminal when a predetermined period elapses because of a poor communication status, there is a mistake in an address, or a uniform resource locator is not successfully obtained.

38. A printer adapter comprising:
receiving means for receiving print data via a communication network from an application server which receives electronic mail from a mobile terminal and which converts the received electronic mail into the print data; and
converting means for converting the print data received by said receiving means into a data format corresponding to an interface for a printer to which the print data is to be sent.

39. A printer comprising:
receiving means for receiving print data from a printer adapter, the print data being converted from electronic mail sent from a mobile terminal by an application server and being sent to said printer adapter, in which the print data is converted into a data format corresponding to an interface for said printer to which the print data is to be sent; and
printing means for performing printing based on the print data received by said receiving means.

40. A printing system according to claim 1, wherein contents of the electronic mail to be printed are sent from a personal computer to said application server by using electronic mail.

41. A printing system according to claim 1, wherein the print data is sent from said application server to said printer adapter by using a public network.

42. A printing control apparatus according to one of claims 13 and 16, further comprising an application server.

43. A printing control method according to one of claims 23 and 26, wherein said printing control method is employed in an application server.

44. A program comprising:
an analyzing step of analyzing an address of received electronic mail; and
a determining step of determining a type of printing of the electronic mail according to a result of an analysis conducted in said analyzing step.

45. A program according to claim 44, wherein the type of printing determined in said determining step comprises printing electronic-mail text, printing an attached file, printing electronic-mail text and an attached file, and printing an Internet homepage.

46. A program according to one of claims 44 and 45, wherein said determining step determines the type of printing of the received electronic mail based on a mail address account.

47. A program comprising:
an input step of inputting an instruction to print a designated Internet homepage;
an identifying step of identifying information concerning a status or a type of printer;
an acquiring step of acquiring data of the designated Internet homepage;
a processing step of processing the data acquired in said acquiring step based on the information concerning the status or the type of printer identified in said identifying step; and
an output step of outputting the data processed in said processing step to the printer.

48. A program according to claim 47, wherein said processing step processes data corresponding to a plurality of pages as data corresponding to a plurality of jobs.

49. A program according to one of claims 47 and 48, wherein the instruction to print the designated Internet homepage is provided by sending electronic mail.

50. A program according to claim 47, wherein said output step outputs the data based on a call from the printer after performing authentication.

51. A program according to claim 47, wherein said processing step processes data corresponding to a plurality of pages as data corresponding to a plurality of jobs or processes data corresponding to a plurality of pages as data corresponding to a single job according to the type of printer.

52. A program according to claim 47, wherein said output step outputs the data when said printing control apparatus calls and reports a telephone number of said printing control apparatus to the printer and when the printer calls back the reported telephone number.

53. A program according to claim 47, wherein said processing step selects and starts a printer driver corresponding to said printer, and processes the data by the started driver.

54. A program according to claim 45, wherein electronic-mail text is to be printed when said determining step determines that the Internet homepage is to be printed and when a uniform resource locator is not described in the electronic-mail text.

55. A program according to one of claims 45 and 47, wherein said program is executed in an application server.

56. A storage medium storing processor implementable instructions for controlling a processor to carry out the method of any one of claims 23 to 32, or claim 34, or claim 36.

57. An electrical signal conveying processor implementable instructions for controlling a processor to carry out the method of any one of claims 23 to 32, or claim 34, or claim 36.
